# EUROPEAN PATENT SPECIFICATION

(11) **EP 2 158 803 B1**
(45) Date of publication and mention of the grant of the patent: **27.04.2011**
(21) Application number: 08105133.6
(22) Date of filing: 26.08.2008
(51) Int. Cl.: A01G 3/02, A01G 3/025, A01G 3/033, A01G 3/037, B26B 15/00

(54) **Vegetation cutting tool**
Gemüseschneidewerkzeug
Outil de découpe de végétaux

(43) Date of publication of application: 03.03.2010
(73) Proprietor: Robert Bosch GmbH, 70442 Stuttgart (DE)
(72) Inventor: Poole, Richard, Ipswich, Suffolk IP32 7LR (GB); Butcher, Nicholas, Ipswich, Suffolk IP3 0BB (GB)

(56) References cited:
- EP-A- 0 307 355
- FR-A- 2 635 435
- FR-A- 2 691 042
- FR-A- 2 790 638
- US-A- 2 529 895
- US-A1- 2004 045 175

## Description

### FIELD OF THE INVENTION

The present invention relates to a vegetation cutting tool. In particular, the present invention relates to a blade arrangement for a vegetation cutting tool and a vegetation cutting tool including such an arrangement.

### BACKGROUND OF THE INVENTION

Pruning tools in the form of secateurs are well known for use in cutting plant stems and trees and shrub branches. There are three basic types of secateur: "anvil", which comprise a single blade that can be moved against a flat surface to cut a stem; "bypass", which usually comprise a pair of blades (often just one of the blades has a cutting surface) that are operated like a pair of scissors, and which provide a shearing force to cut the stem as the blades are moved passed each other; and "parrot-beak", which are also operable like a pair of scissors and which comprise a pair of concave blades, between which a stem can be trapped and cut.

Pruning tools may be manually operated or driven, usually by an electric motor. For example, EP803187 A2 describes a set of pruning shears which have two relatively adjustable cutting blades, one of which is secured to the housing of the shears, the other operated by an electric motor.

DE19849976 A1 also describes a set of motor driven shears having a fixed blade and a moveable blade. The moveable blade is coupled swivellable with the fixed blade such that it can carry out a cutting operation in conjunction with the fixed blade. Movement of the blade is controlled by an electric motor which is coupled to a control unit and sensor to detect when the blade is at the predetermined extremes of operation.

However, the designs of these pruning tools are such that the cutting blades have a wide opening which means it is easy for the user to accidentally catch their non-holding hand within the blades. The wide opening additionally leads to the problem of overloading of the cutting capacity. A further problem is that when the blades of these tools arc in an open configuration, their sharp edges are exposed presenting an additional hazard.

The present invention seeks to overcome at least some of these disadvantages and provide a blade arrangement for a pruning tool that is safer to use.

FR2691042 describes a blade arrangement as defined in the preamble to claim 1.

### SUMMARY OF THE INVENTION

In a first aspect of the present invention there is provided a blade arrangement as defined in Claim 1.

Preferably, the fixed blade and vegetation guide of the second cutter member are formed as a unitary element.

Preferably, the channel has a mouth which acts to guide vegetation to be cut, in use, into the channel. Suitably, the channel also includes an entrance between the channel and the mouth. Suitably, the channel and entrance are substantially equal in widths. Alternatively, the entrance includes one or more projections which protrude into the channel, such that the entrance is narrower in width than the channel.

Preferably, the channel width is equal to or less than the channel length. Suitably, the entrance width is between 8mm and 25mm; preferably, between 12mm and 18mm; more preferably about 14mm.

Suitably, the channel length to the entrance is between 20mm and 50mm, preferably, between 25mm and 40mm, more preferably about 30mm.

Preferably, the mouth is wider than the entrance width. Preferably, the mouth includes flared sides. Preferably, the mouth sides flare at an angle of between 40 degrees and 70 degrees; more preferably, between an angle of 45 degrees and 60 degrees; most preferably about 50 degrees.

The cutting surface of the moveable blade comprises a sharpened leading edge. The sharpened leading edge has a curved profile. The sharpened leading edge has a convex profile.

Preferably, the fixed blade comprises an unsharpened leading edge. The unsharpened leading edge has a curved profile. The unsharpened leading edge has a concave profile, complementary to the sharpened leading edge profile of the moveable blade.

Suitably, the leading edge of the fixed blade has a square cross-section. Alternatively, the leading edge of the fixed blade has a rhombic cross-section that is angled at between 60 degrees and 85 degrees from the plane of the fixed blade and away from the leading edge of the moveable blade.

Preferably, when the moveable blade is in the first angular position its cutting surface is not exposed to the channel. Preferably, the moveable blade is moveable within a plane that is parallel to the plane in which the fixed blade lies, wherein when the moveable blade is in the first angular position it is located adjacently against the vegetation guide and the cutting surface of the moveable blade is directed towards the channel but does not protrude into the channel, and when the moveable blade is in the second angular position it traverses the channel and its cutting surface lies against the fixed blade having passed over the channel.

Suitably, the mouth comprises a lower lead on the fixed blade and an upper lead on the vegetation guide. Preferably, the lower and upper leads provide a mouth substantially greater in width than the width of the channel.

Suitably, the lower and upper leads provide a mouth substantially greater in width than the width of the entrance.

Suitably, the channel length to its entrance is greater than the length swept by the moveable blade.

Preferably, the vegetation guide and fixed blade profiles of the second cutter member comprise rounded ends.

Preferably, the fixed blade includes a drain in the form of a recess.

In a second aspect there is provided a cutting tool comprising a blade arrangement as described above.

Preferably, the cutting tool is a pruning tool. Suitably, the pruning tool is motor driven and comprises a body, motor unit and a cutting head comprising the blade arrangement.

Preferably, the pruning tool is battery-powered. More preferably, the battery is rechargeable; most preferably, the battery is a lithium-ion battery.

### BRIEF DESCRIPTION OF THE DRAWINGS

The above and other aspects of the present invention will now be illustrated in further detail, by way of example only, with reference to the accompanying drawings in which:
- Figure 1: is an embodiment of a pruning tool in accordance with the second aspect of the invention;
- Figure 2: is an embodiment of a first member of a blade arrangement in accordance with the first aspect of the invention;
- Figure 3: is an embodiment of a second member of a blade arrangement in accordance with the first aspect of the invention;
- Figure 4: is an embodiment of a blade arrangement in accordance with the first aspect of the invention, in a first angular position;
- Figure 5: is an embodiment of a blade arrangement in accordance with the first aspect of the invention, in a second angular position;
- Figure 6: is a schematic profile of an alternative blade arrangement not falling within the scope of the claimed subject matter;
- Figure 7: is an embodiment of a blade arrangement in accordance with the first aspect of the invention, in an intermediate angular position; and
- Figure 8: is a section through the embodiment of Figure 7.

### DETAILED DESCRIPTION OF THE INVENTION

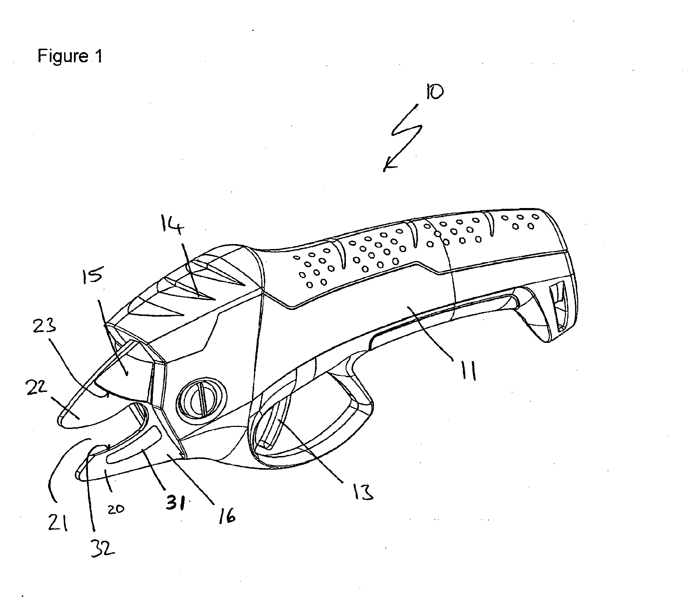

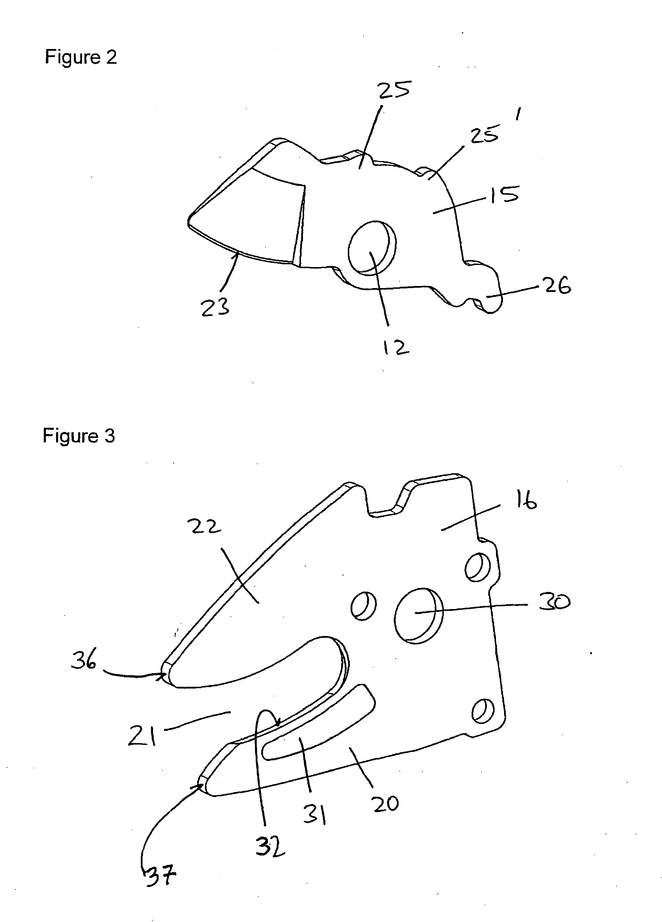

Referring to Figure 1, there is shown a pruning tool 10 generally of the bypass type and comprising an elongate handle 11, the handle including a user-control in the form of a trigger 13. Handle 11 further includes a cutting head 14 located at a front end of handle 11, the cutting head 14 comprising a moveable blade 15 and a fixed cutting head element in the form of plate 16. As most clearly shown in Figure 3, plate 16 comprises a fixed blade 20 and a vegetation guide 22 forming a vegetation-receiving channel 21 therebetween.

As shown in Figure 2, moveable blade 15 includes a sharpened leading or cutting edge 23 and a moveable blade aperture 12. In addition, the moveable cutter element includes a pair of profiles 25,25' for actuating blade positioning sensors for the purpose of limiting the angular movement of the moveable blade 15, in use, and an engagement tab 26 for linking the moveable blade 15 to a driving mechanism (not shown).

As can be seen most clearly in Figure 3, plate 16 also includes a plate aperture 30 and a recess 31. The profile edges 36,37 of plate 16 are rounded such that no sharpened edges are presented to the user. In use, recess 31 provides relief to surplus materials such as sappy liquid materials which may be released from a cut surface of a plant. In preferred embodiments, the recess has a depth of about 0.5mm.

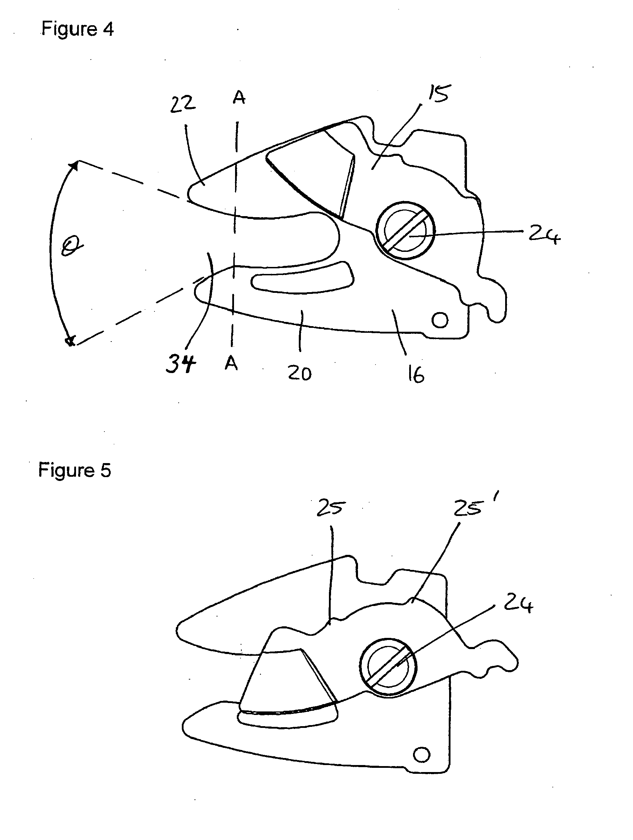

Referring to Figure 4, the vegetation-receiving channel 21 formed between the fixed blade 20 and vegetation guide 22 of the plate 16 is substantially uniform in width. In preferred embodiments, the channel width is equal to or less than the channel length - the channel 21 being defined at its closed end by the plate 16 and its open end by an entrance (defined by hashed line A-A) which denotes a boundary between the channel limit and the mouth 34. The entrance A-A to vegetation-receiving channel 21, has a width of between 8mm and 25mm; preferably, between 12mm and 18mm; more preferably about 14mm.

In preferred embodiments an upper edge of the fixed blade 20, which forms one side of the vegetation-receiving channel 21, has a concave profile, and the lower edge of vegetation-guide 22, which forms an opposing side of the vegetation-receiving channel 21, has a convex profile. The concave profile of the upper edge of fixed blade 20 is curved in a radius of between 40mm and 80mm; preferably 50mm and 70mm; more preferably about 60mm. Whereas, the convex profile of the lower edge of vegetation-guide 22 is curved in a radius of between 25mm and 65mm; preferably 35mm and 55mm; more preferably about 46mm. The sharpened leading edge 23 of the moveable blade 15 has a curved profile having a similar radius to that of the lower edge of vegetation-guide 22.

Accordingly, material may be restricted from entering the vegetation-receiving channel 21 on the basis of its size with the minimum channel width being selected to minimise the likelihood of a user's finger entering the blade area inadvertently. A channel width of 14mm is preferred to assist in preventing accidental injury to the user.

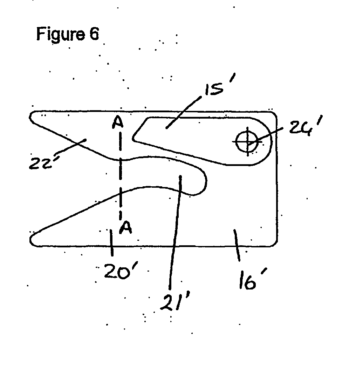

In the embodiment schematically illustrated in Figure 6, the vegetation-receiving channel 21' is curved in an opposite manner to the curved vegetation-receiving channel 21' illustrated in Figures 1 to 5.

In all of the above-mentioned embodiments, the minimum channel width or entrance width is selected to prevent a user from accidentally placing a finger in the blade area without some contact with the blade arrangement taking place. This has the effect of alerting the user to the potential danger. The preferred channel width or entrance width is 14mm such that a finger of a user who is not wearing gloves will minimally contact the blade arrangement should their finger accidentally approaches the channel, or a gloved finger would be physically restricted from entering the channel.

The mouth 34 is generally wider than the vegetation-receiving channel 21, and has flared sides which act to guide any material to be cut into the vegetation-receiving channel 21. The mouth sides flare at an angle θ, typically of between 40 degrees and 70 degrees; preferably between an angle of 45 degrees and 60 degrees; more preferably about 50 degrees (See Figure 4).

In the assembled blade arrangement, illustrated in Figures 4 and 5, a pin and pivot bush 24 have been inserted through moveable blade aperture 12 and plate aperture 30 of plate 16 and secured by conventional means to mount moveable blade 15 pivotally upon the plate 16 about a pivot point defined by pin and pivot bush 24.

In preferred embodiments, the moveable blade 15 is demountable through the removal of the pin and pivot bush 24 and disengagement of engagement tab 26 from the driving mechanism.

Moveable blade 15 is pivotally moveable, in use, between retracted and extended positions. When the moveable blade 15 is in the retracted position, as shown in Figure 4, moveable and fixed blades 15,20 are operatively open, and the sharpened leading edge 23 is retracted and lies flush against, and is protected by, vegetation guide 22, and vegetation-receiving channel 21 is open. Advantageously, when the blade arrangement is in the retracted position, no sharpened edges are exposed to, or contactable by the user, such that the pruning tool can remain with the blades in the retracted position for storage purposes.

When the moveable blade 15 is in the extended position, as shown in Figure 5, moveable and fixed blades 15,20 are operatively closed, and the sharpened leading edge 23 is extended and lies flush against, and is thereby protected by, fixed cutting member 20, and channel 21 is closed.

The extent of the vegetation-receiving channel 21 that is swept by the moveable blade 15 as it moves from retracted to extended positions is less than the full length of the vegetation-receiving channel 21. Ideally, this difference is such that an object of even a 2 mm increase in diameter from the entrance width (defined along line A-A of the Figures) will not be contactable as the moveable blade 15 moves, reducing the risk to a user's fingers.

The blade arrangement of a pruning tool in accordance with the invention can be driven manually or by means of a motor. Referring to Figure 5, in use of a preferred embodiment of the invention in which the blade arrangement is motor driven, profiles 25,25' of moveable blade 15 sequentially actuate a pair of electrical limit switches located on or adjacent the fixed cutting head element plate (not shown), in response to the moveable blade being moved between retracted and extended positions. In particular, when the moveable blade is moved between the two positions, the profiles act upon electrical limit switches to indicate to the pruning tool control electronics (not shown) that the blade has reached the respective fully retracted or extended position. This causes the power supplied to the motor to be switched off and preferably short-circuits the motor terminals, so providing a rapid braking effect upon the moveable blade.

In alternative, manually operated pruning tools, profiles 25,25' act to mechanically limit the extent of angular movement at the fully retracted and fully extended positions.

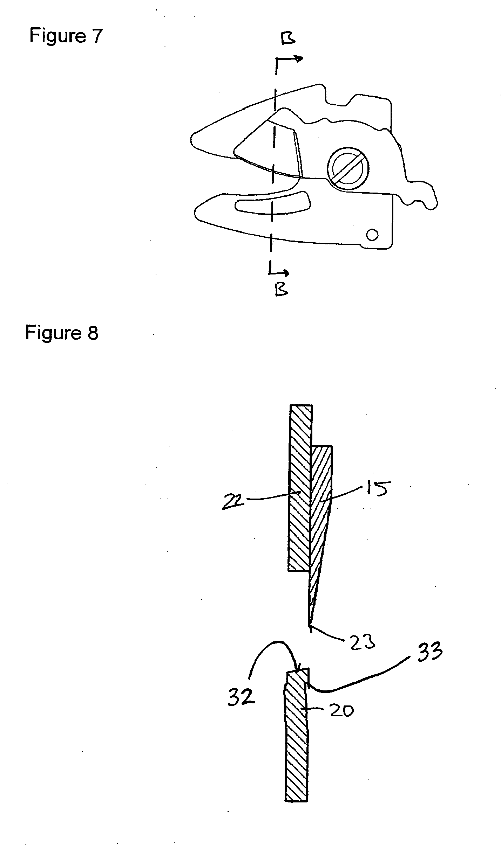

In Figures 7 and 8, the moveable blade 15 is shown in an intermediate position, between the retracted and extended positions. Figure 8 shows a section through the line B-B of the blade arrangement of Figure 7 blade. The sharpened leading edge 23 of the moveable blade 15 is clearly shown. In addition, it can be seen that the fixed blade 20 has an unsharpened leading edge 32. In the embodiment shown, the unsharpened leading edge 32 has rhombic cross-section that is angled at between 60 degrees and 85 degrees from the plane in which the fixed blade 20 lies, and in a direction towards the leading edge 23 of the moveable blade 15, for improved cutting performance. The unsharpened edge 32 may be chamfered (not shown).

As can be seen in Figure 8 the sectional view shows a discrete edge 33 in the profile of the upper portion of recess 31. The discrete edge 33 assists in the relief of surplus sappy materials during the cutting process.

In alternative embodiments (not shown), the unsharpened leading edge 32 has squared cross-section.

As illustrated in the Figures, the unsharpened leading edge has a concave profile.

In alternative embodiments (not shown), at least a portion of the leading edge the fixed blade is sharpened.

As discussed above, the moveable blade is constructed with a sharpened leading edge and operates in flush contact with one face of the fixed blade. An advantage of this blade arrangement is that the moveable blade 15 is flush to the fixed blade 20 in its fully extended position and also flush to the vegetation guide 22 in a fully retracted position. Accordingly, since the fixed blade 20 and vegetation guide 22 are both constructed with smooth outer profiles and without sharpened edges, this minimises the risk of the user accidentally cutting themselves either on the sharpened leading edge of the moveable blade 20 or on any other part of the blade arrangement since no sharpened edges are exposed when the blade arrangement is in either the fully retracted or the fully extended position. A particular advantage of this is that the tool can be safely stored with the blades in their fully retracted position. The user does not therefore have to take additional actions to move the blades to a special closed or locked position prior to storage.

As an additional safety feature, the profile of the fixed blade 20 and vegetation guide is also rounded to provide protection to the user.

In use, the action of driving moveable blade 15 towards the fixed blade 20 provides a shearing action therebetween in the manner of a bypass-type pruner. That shearing action can be used to cut any vegetation which has been located within the vegetation-receiving channel 21. The action of driving the moveable blade 15 towards the fixed blade 20 provides a simple cutting force therebetween, in which a sharpened leading edge of the moveable blade 15 forces the article to be cut against the fixed blade 20 to thereby cut the article in the manner of an anvil-type pruner.

In motor driven embodiments the pruning tool is ideally powered by lithium-ion cells due to their relative lightness in weight. In these embodiments control electronics for the motor and or limit switch operations are also utilised to provide lithium-ion battery monitoring and controlling functions. For example, to disable operation of the motor in the event that the battery becomes discharged or its temperature reaches a predefined limit.

## Claims

1. A blade arrangement for a vegetation cutting tool, the blade arrangement comprising first and second cutter members (15,16) having respective cutting surfaces (23,32),
wherein the first cutter member (15) is a moveable blade pivotably mounted with respect to the second cutter member (16);
wherein at least the first cutter member (15) is moveable between a first angular position with respect to the second cutter member (16), in which a space is formed between the respective cutting surfaces (23,32), and a second angular position with respect to the second cutter member (16), in which the space between the respective cutting surfaces (23,32) is closed;
wherein the second cutter member (16) comprises a fixed blade (20) and a vegetation guide (22), and wherein the fixed blade (20) and vegetation guide (22) form a channel (21) therebetween; **characterised in that**
the channel (21) formed between the fixed blade (20) and vegetation guide (22) of the second cutter member (16) is substantially uniform in width; and **in that** an upper edge (32) of the fixed blade (20), which forms one side of the vegetation-receiving channel (21), has a concave profile, and the lower edge of vegetation-guide (22), which forms an opposing side of the vegetation-receiving channel (21), has a convex profile;
wherein the concave profile of the upper edge (32) of fixed blade (20) is curved in a radius of between 40mm and 80mm;;
wherein the convex profile of the lower edge of vegetation-guide (22) is curved in a radius of between 25mm and 65mm; and
wherein the sharpened leading edge (23) of the moveable blade (15) has a curved profile having a similar radius to that of the lower edge of vegetation-guide (22).

2. A blade arrangement as claimed in claim 1 wherein at least one of the concave profile of the upper edge (32) of fixed blade (20) is curved in a radius of between 50mm and 70mm preferably about 60mm; and the convex profile of the lower edge of vegetation guide (22) is curved in a radius of between 35mm and 55mm, preferably about 45mm.

3. A blade arrangement as claimed in claim 1 or claim 2, wherein the channel width is equal to or less than the channel length.

4. A blade arrangement as claimed in any of the preceding claims, wherein the channel (21) has a mouth (34) which acts to guide vegetation to be cut, in use, in to the channel (21), and includes an entrance between the channel (21) and the mouth (34).

5. A blade arrangement as claimed in claim 4, wherein the channel width is wider than that of the entrance.

6. A blade arrangement as claimed in claim 4, wherein the entrance width is between 8mm and 25mm; preferably, between 12mm and 18mm; more preferably about 14mm.

7. A blade arrangement as claimed in any one of the preceding claims, wherein the mouth (34) has a greater width than that of the entrance, and includes flared sides, in which the mouth sides flare at an angle of between 40 degrees and 70 degrees; more preferably, between an angle of 45 degrees and 60 degrees; most preferably about 50 degrees.

8. A blade arrangement as claimed in any one of the preceding claims, wherein a leading edge (32) of the fixed blade (20) has a rhombic cross-section that is angled at between 60 degrees and 85 degrees from the plane of the fixed blade (20) and away from the leading edge (23) of the moveable blade (15).

9. A blade arrangement as claimed in any one of the preceding claims, wherein when the moveable blade (15) is in the first angular position its cutting surface (23) is not exposed to the channel (21).

10. A blade arrangement as claimed in claim 9, wherein the moveable blade (15) is moveable within a plane that is parallel to the plane in which the fixed blade (20) lies, wherein when the moveable blade (15) is in the first angular position it is located adjacently against the vegetation guide (22) and the cutting surface (23) of the moveable blade (15) is directed towards the channel (21) but does not protrude into the channel (21), and when the moveable blade (15) is in the second angular position it traverses the channel (21) and its cutting surface (23) lies against the fixed blade (20) having passed over the channel (21).

11. A blade arrangement as claimed in any one of claims 4 to 10, wherein the channel length to the entrance is between 20mm and 50mm, preferably, between 25mm and 40mm, more preferably about 30mm.

12. A blade arrangement as claimed in any one of claims 4 to 11, wherein the channel length to the entrance is greater than the length swept by the moveable blade (15).

13. A blade arrangement as claimed in any one of the preceding claims, wherein the vegetation guide (22) and fixed blade (20) profiles of the second cutter member (16) comprise rounded ends (36,37).

14. A cutting tool comprising a blade arrangement as claimed in any one of claims 1 to 13, preferably in the form of a pruning tool.

## Patentansprüche

1. Messeranordnung für ein Vegetationsschneidewerkzeug, wobei die Messeranordnung ein erstes und ein zweites Schneidelement (15, 16) mit jeweiligen Schneidflächen (23, 32) umfasst,
wobei das erste Schneidelement (15) ein bewegliches Messer ist, das bezüglich des zweiten Schneidelements (16) schwenkbar montiert ist,
wobei mindestens das erste Schneidelement (15) zwischen einer ersten Winkelposition bezüglich des zweiten Schneidelements (16), in der zwischen den jeweiligen Schneidflächen (23, 32) ein Raum gebildet ist, und einer zweiten Winkelposition bezüglich des zweiten Schneidelements (16), in der der Raum zwischen den jeweiligen Schneidflächen (23, 32) geschlossen ist, beweglich ist,
wobei das zweite Schneidelement (16) ein feststehendes Messer (20) und eine Vegetationsführung (22) umfasst und wobei das feststehende Messer (20) und die Vegetationsführung (22) zwischen sich einen Kanal (21) bilden, **dadurch gekennzeichnet, dass**
der zwischen dem feststehenden Messer (20) und der Vegetationsführung (22) des zweiten Schneidelements (16) gebildete Kanal (21) im Wesentlichen einheitlich in der Breite ist und dass ein oberer Rand (32) des feststehenden Messers (20), der eine Seite des Vegetationsaufnahmekanals (21) bildet, ein konkaves Profil hat, und der untere Rand der Vegetationsführung (22), der eine gegenüberliegende Seite des Vegetationsaufnahmekanals (21) bildet, ein konvexes Profil hat,
wobei das konkave Profil des oberen Rands (32) des feststehenden Messers (20) in einem Radius zwischen 40 mm und 80 mm gebogen ist,
wobei das konvexe Profil des unteren Rands der Vegetationsführung (22) in einem Radius zwischen 25 mm und 65 mm gebogen ist und
wobei der scharfe vordere Rand (23) des beweglichen Messers (15) ein gebogenes Profil hat, dessen Radius ähnlich dem des unteren Rands der Vegetationsführung (22) ist.

2. Messeranordnung nach Anspruch 1, wobei mindestens eines der konkaven Profile des oberen Rands (32) des feststehenden Messers (20) in einem Radius zwischen 50 mm und 70 mm und vorzugsweise von ungefähr 60 mm gebogen ist und wobei das konvexe Profil des unteren Rands der Vegetationsführung (22) in einem Radius zwischen 35 mm und 55 mm und vorzugsweise von ungefähr 45 mm gebogen ist.

3. Messeranordnung nach Anspruch 1 oder 2, wobei die Kanalbreite kleiner-gleich der Kanallänge ist.

4. Messeranordnung nach einem der vorhergehenden Ansprüche, wobei der Kanal (21) eine Mündung (34) hat, die im Gebrauch als Führung von zu schneidender Vegetation in den Kanal (21) wirkt, und einen Eingang zwischen dem Kanal (21) und der Mündung (34) aufweist.

5. Messeranordnung nach Anspruch 4, wobei der Kanal breiter als der Eingang ist.

6. Messeranordnung nach Anspruch 4, wobei die Eingangsbreite zwischen 8 mm und 25 mm, vorzugsweise zwischen 12 mm und 18 mm und besonders bevorzugt ungefähr 14 mm beträgt.

7. Messeranordnung nach einem der vorhergehenden Ansprüche, wobei die Mündung (34) breiter als der Eingang ist und kelchende Seiten aufweist, wobei die Mündungsseiten in einem Winkel zwischen 40 Grad und 70 Grad, bevorzugter zwischen einem Winkel von 45 Grad und 60 Grad und besonders bevorzugt in einem Winkel von ungefähr 50 Grad kelchen.

8. Messeranordnung nach einem der vorhergehenden Ansprüche, wobei ein vorderer Rand (32) des feststehenden Messers (20) einen rautenförmigen Querschnitt hat, der zwischen 60 Grad und 85 Grad von der Ebene des feststehenden Messers (20) und vom vorderen Rand (23) des beweglichen Messers (15) weg abgewinkelt ist.

9. Messeranordnung nach einem der vorhergehenden Ansprüche, wobei die Schneidfläche (23) des beweglichen Messers (15), wenn dieses in der ersten Winkelposition ist, nicht zum Kanal (21) hin freiliegt.

10. Messeranordnung nach Anspruch 9, wobei das bewegliche Messer (15) innerhalb einer Ebene beweglich ist, die parallel zu der Ebene verläuft, in der das feststehende Messer (20) liegt, wobei das bewegliche Messer (15), wenn es in der ersten Winkelposition ist, benachbart an der Vegetationsführung (22) angeordnet ist und die Schneidfläche (23) des beweglichen Messers (15) zwar zum Kanal (21) hin gerichtet ist, aber nicht in den Kanal (21) hineinragt, und wobei das bewegliche Messer (15), wenn es in der zweiten Winkelposition ist, den Kanal (21) überquert und seine Schneidfläche (23) am feststehenden Messer (20) liegt, nachdem es über den Kanal (21) gegangen ist.

11. Messeranordnung nach einem der Ansprüche 4 bis 10, wobei die Kanallänge zum Eingang zwischen 20 mm und 50 mm, vorzugsweise zwischen 25 mm und 40 mm und besonders bevorzugt ungefähr 30 mm beträgt.

12. Messeranordnung nach einem der Ansprüche 4 bis 11, wobei die Kanallänge zum Eingang größer ist als die Länge, die vom beweglichen Messer (15) überstrichen wird.

13. Messeranordnung nach einem der vorhergehenden Ansprüche, wobei die Profile der Vegetationsführung (22) und des feststehenden Messers (20) des zweiten Schneidelements (16) abgerundete Enden (36, 37) umfassen.

14. Schneidewerkzeug mit einer Messeranordnung nach einem der Ansprüche 1 bis 13, vorzugsweise in der Form eines Zurückschneidewerkzeugs.

## Revendications

1. Agencement de lame pour un outil de coupe de végétaux, l'agencement de lame comprenant des premier et second éléments de cisaille (15, 16) dotés de surfaces de coupe (23, 32) respectives ;
dans lequel le premier élément de cisaille (15) est une lame mobile fixée de façon pivotante par rapport au second élément de cisaille (16) ;
dans lequel le premier élément de cisaille (15), au moins, est mobile entre une première position angulaire formant un angle par rapport au second élément de cisaille (16), dans laquelle un espace est formé entre les surfaces de coupe (23, 32) respectives, et une seconde position angulaire formant un angle par rapport au second élément de cisaille (16), dans laquelle l'espace prévu entre les surfaces de coupe (23, 32) respectives est clos ;
dans lequel le second élément de cisaille (16) comprend une lame fixe (20) et un guide-végétaux (22) et dans lequel la lame fixe (20) et le guide-végétaux (22) forment un canal (21) interposé ;
**caractérisé en ce que** :
la largeur du canal (21) formé entre la lame fixe (20) et le guide-végétaux (22) du second élément de cisaille (16) est sensiblement uniforme ; et
un bord supérieur (32) de la lame fixe (20), qui forme un côté du canal de réception de végétaux (21),
présente un profil concave et le bord inférieur du guide-végétaux (22), qui forme un côté opposé du canal de réception de végétaux (21), présente un profil convexe ;
le profil concave du bord supérieur (32) de la lame fixe (20) étant incurvé selon un rayon compris entre 40 mm et 80 mm ;
le profil convexe du bord inférieur du guide-végétaux (22) étant incurvé selon un rayon compris entre 25 mm et 65 mm ; et
le bord d'attaque (23) tranchant de la lame mobile (15) présentant un profil incurvé ayant un rayon similaire à celui du bord inférieur du guide-végétaux (22).

2. Agencement de lame selon la revendication 1, dans lequel au moins un profil concave du bord supérieur (32) de la lame fixe (20) est incurvé selon un rayon compris entre 50 mm et 70 mm, de préférence d'environ 60 mm ; et le profil convexe du bord inférieur du guide-végétaux (22) est incurvé selon un rayon compris entre 35 mm et 55 mm, de préférence d'environ 45 mm.

3. Agencement de lame selon la revendication 1 ou 2, dans lequel la largeur du canal est inférieure ou égale à la longueur de canal.

4. Agencement de lame selon l'une quelconque des revendications précédentes, dans lequel le canal (21) a une embouchure (34) qui, lors du fonctionnement, agit de façon à guider les végétaux à couper pour les amener à l'intérieur du canal (21) et comprend une entrée positionnée entre le canal (21) et l'embouchure (34).

5. Agencement de lame selon la revendication 4, dans lequel la largeur du canal est plus large que celle de l'entrée.

6. Agencement de lame selon la revendication 4, dans lequel la largeur de l'entrée est comprise entre 8 mm et 25 mm ; de préférence entre 12 mm et 18 mm ; et est de façon davantage préférée d'environ 14 mm.

7. Agencement de lame selon l'une quelconque des revendications précédentes, dans lequel l'embouchure (34) a une largeur supérieure à celle de l'entrée et comprend des côtés évasés, les côtés d'embouchure s'évasant selon un angle compris entre 40 degrés et 70 degrés ; l'angle étant compris, de façon davantage préférée, entre 45 degrés et 60 degrés ; et étant de façon préférée entre toutes d'environ 50 degrés.

8. Agencement de lame selon l'une quelconque des revendications précédentes, dans lequel un bord d'attaque (32) de la lame fixe (20) a une section transversale rhombique qui forme un angle compris entre 60 degrés et 85 degrés par rapport au plan de la lame fixe (20) et à l'écart du bord d'attaque (23) de la lame mobile (15).

9. Agencement de lame selon l'une quelconque des revendications précédentes, dans lequel lorsque la lame mobile (15) se situe dans la première position angulaire, sa surface de coupe (23) n'est pas exposée en direction du canal (21).

10. Agencement de lame selon la revendication 9, dans lequel la lame mobile (15) est mobile à l'intérieur d'un plan qui est parallèle au plan dans lequel la lame fixe (20) repose, dans lequel lorsque la lame mobile (15) est dans la première position angulaire, elle est positionnée tout contre le guide-végétaux (22) et la surface de coupe (23) de la lame mobile (15) est dirigée en direction du canal (21) mais ne ressort pas dans le canal (21), et lorsque la lame mobile (15) est dans la seconde position angulaire, elle traverse le canal (21) et sa surface de coupe (23) repose contre la lame fixe (20) ayant traversé le canal (21).

11. Agencement de lame selon l'une quelconque des revendications 4 à 10, dans lequel la longueur du canal par rapport à l'entrée est comprise entre 20 mm et 50 mm, de préférence entre 25 mm et 40 mm, de façon davantage préférée d'environ 30 mm.

12. Agencement de lame selon l'une quelconque des revendications 4 à 11, dans lequel la longueur du canal par rapport à l'entrée est supérieure à la longueur parcourue par la lame mobile (15).

13. Agencement de lame selon l'une quelconque des revendications précédentes, dans lequel le profil du guide-végétaux (22) et de la lame fixe (20) du second élément de cisaille (16) présente des extrémités arrondies (36, 37).

14. Outil de coupe comprenant l'agencement de lame selon l'une quelconque des revendications 1 à 13, de préférence sous la forme d'un outil d'élagage.
